# EUROPÄISCHE PATENTSCHRIFT

(11) **EP 1 290 278 B1**
(45) Veröffentlichungstag und Bekanntmachung des Hinweises auf die Patenterteilung: **10.01.2007**
(21) Anmeldenummer: 01940009.2
(22) Anmeldetag: 31.05.2001
(51) Int. Cl.: E01C 11/14, G01V 15/00

(54) **LOKALISIERBARER FUGENDÜBEL**
LOCATABLE JOINING PIN
GOUJON POUR BETON LOCALISABLE

(30) Priorität: 31.05.2000 AT 9622000
(43) Veröffentlichungstag der Anmeldung: 12.03.2003
(73) Patentinhaber: TCI Produktions- und Vertriebs G.m.b.H., 2340 Mödling (AT)
(72) Erfinder: STANGL, Hermann, A-8680 Mürzzuschlag (AT)
(74) Vertreter: Patentanwälte BARGER, PISO & PARTNER
(86) Internationale Anmeldenummer: PCT/AT2001/000180
(87) Internationale Veröffentlichungsnummer: WO 2001/092639

(56) Entgegenhaltungen:
- WO-A-00/24968
- US-A- 5 532 598

## Beschreibung

Die Erfindung betrifft einen Fugendübel, bestehend aus dem eigentlichen, aus Kunststoff bestehenden Dübel und einer einteiligen oder mehrteiligen, aus Kunststoff bzw. Kunststoffen bestehenden Hülse, entsprechend dem Oberbegriff des Anspruches 1.

Ein derartiger Fugendübel ist aus der WO 00/24968 A bekannt. Ein derartiger Dübel ist nach dem Verlegen im Beton nicht mehr zu orten, und es kann kein Nachweis erbracht werden, dass er ordnungsgemäße verlegt worden ist

Bei der Herstellung und der Sanierung von Betonbahnen, wie Autobahnen, Landebahnen, Rollfeldern u.dgl. ist es wünschenswert, ein Nachweisverfahren dafür zu haben, daß die Fugendübel richtig verlegt wurden, da davon die Lebensdauer und die Belastbarkeit der betonierten Fläche wesentlich abhängt.

Normale Metallortungsgeräte, wie beispielsweise Minensuchgeräte oder ähnliche Vorrichtungen, wie sie beispielsweise in der US 5,532,598 A beschrieben sind, versagen erstaunlicherweise bei herkömmlichen, aus Metallstäben bestehenden Dübeln, da durch die Form und Größe dieser Dübel ein so diffuses Bild erhalten wird, daß über Orientierung und Tiefe, somit über die eigentliche Lage der Dübel, keine klaren Aussagen mehr getroffen werden können. Es ist gemäß dem Stand der Technik notwendig, eine Röntgenanalyse durchzuführen, was mit großem Aufwand verbunden ist und nur durch hoch spezialisiertes und entsprechend teures Personal durchgeführt werden kann. Dazu kommt, daß durch die Art der Ergebnisse dieser Prüfung eine aufwendige Interpretationsarbeit notwendig ist, die wesentlich zu den Kosten beiträgt.

Im Zuge der fortschreitenden Entwicklungen auf dem Gebiete der Fugendübel werden in letzter Zeit vermehrt Fugendübel aus nicht-metallischen Materialien, insbesondere aus glasfaserverstärktem Kunststoff eingesetzt, die sich einer Ortung prinzipiell widersetzen und deren Lage nach erfolgtem Einbau und Vergießen nicht mehr festgestellt werden kann. Dieses Problem stellt ein echtes Hindernis bei der Verwendung der nicht-metallischen Fugendübel dar, die sich aber von ihrer Wirkungsweise her und insbesondere wegen ihrer absoluten Korrosionsfestigkeit wesentlich besser zum Einbau in Betonfeldern eignen als die herkömmlichen metallischen Dübel.

Es besteht somit ein großer Bedarf an einem Verfahren zur Lokalisierung derartiger Dübel und die Erfindung bezweckt, einen lokalisierbaren Dübel anzugeben.

Erfindungsgemäß erreicht man das angestrebte Ziel gemäß dem kennzeichnenden Teil des Anspruches 1 dadurch, dass im Bereich jedes der beiden Enden des Dübels eine metallische Markierung angebracht ist Damit kann überraschenderweise die Ortung mit einem üblichen Metallsuchgerät erfolgreich durchgeführt werden.

Da Metallsuchgeräte auf der Änderung des magnetischen Flusses im Bereich metallischer und insbesondere ferromagnetischer Stoffe beruhen, sind sie in der Lage, auch sehr kleine Metallanhäufungen festzustellen und genau zu lokalisieren, ja derartige kleinvolumige Metallanhäufungen können besser geortet werden als große und insbesondere längliche, da sie ein eindeutiges und kleinräumiges "Echo" ergeben.

Die erfindungsgemäß verwendeten Markierungen können an die Stirnenden der Dübel, entweder der eigentlichen Dübel oder deren Hülsen, aufgeklebt, eingedrückt oder bei der Herstellung mit eingegossen werden. Eine einfache Methode ist es, an jedem Dübelende ein passendes Metallstück zwischen die Stirnflächen des eigentlichen Dübels und die Stirnflächen der Hülse einzulegen. Dabei ist nur auf die notwendige Abstimmung der Längen der einzelnen Bauteile zu achten, um die axiale Beweglichkeit des Dübels in seiner Hülse nicht zu beeinträchtigen. Es ist selbstverständlich auch möglich, die Enden mit einer Folie od.dgl. zu umwickeln, wesentlich ist nur, daß ein Material verwendet wird, das bereits in geringem Volumen eine entsprechende Änderung des magnetischen Flusses ergibt, um zu einem eindeutigen Resultat zu führen.

Als Ortungsgerät selbst eignen sich Metallsuchgeräte, beispielsweise auf der Basis des unter der Bezeichnung VAMIDS^{®} von Schiebel vertriebenen Minensuchgerätes. Dieses arbeitet von einem Fahrzeug aus und kann bei vorgegebener (oder bekannter) Bewegung (beispielsweise in Schlangenlinien entlang der Fugen zwischen den Betonplatten) in vorgegebener Höhe über der Fahrbahnoberfläche die Metallanhäufungen finden und lokalisieren und ihre Position in digitaler Form auf einem passenden Medium (Magnetband, Festplatte, etc.) speichern. Es kann so durch einfaches Abfahren einer fertiggestellten Betonfläche die richtige Lage aller darin eingebrachten Dübel verifiziert werden. Es ist für den Fachmann in Kenntnis der Erfindung nicht schwer, das vorgegebene Auswerteprogramm so zu adaptieren, daß jeweils paarweise zueinander gehörende Metallobjekte als solche erkannt und, falls gewünscht, in einer graphischen Auswertung entsprechend dargestellt werden.

Als Material für die Metalleinlagen eignen sich alle Metalle, man kann diese daher nach Gutdünken wählen. Insbesondere ist einfacher Baustahl, wegen seiner niedrigen Kosten und guten Verfügbarkeit geeignet. Daß er unter Umständen nach einiger Zeit wegkorrodiert spielt keine Rolle, da er ja nur unmittelbar nach dem Verlegen der Dübel erkennbar sein muß. Gut geeignet wegen der leichten Handhabbarkeit sind auch handelsübliche Beilagscheiben mit einem Außendurchmesser, der etwas unter dem Innendurchmesser der Hülse des Dübels liegt und einer Dicke von 1 bis 5 mm. Geeignet sind auch, wegen ihrer Korrosionsfestigkeit und ihres geringen Gewichtes, Aluminiumscheiben, gegebenenfalls gelocht.

Es ist bei der Auswahl des Materials und der Wahl der Abmessungen nicht nur auf ein leichtes Handling zu achten (die Erkennung durch das Ortungsgerät spielt wegen dessen Empfindlichkeit praktisch keine Rolle), sondern auch darauf, daß die durchschnittliche Dichte des gesamten Dübels im wesentlichen der Dichte des frisch vergossenen Betons entsprechen soll, um ein Absinken bzw. Aufschwimmen des Dübels im noch zähflüssigen Beton zufolge des Auftriebes möglichst zu vermeiden.

## Patentansprüche

1. Fugendübel, bestehend aus dem eigentlichen, aus Kunststoff bestehenden Dübel und einer einteiligen oder mehrteiligen, aus Kunststoff bzw. Kunststoffen bestehenden Hülse, **dadurch gekennzeichnet, daß** im Bereich jedes seiner beiden Enden eine metallische Markierung angebracht ist.

2. Fugendübel nach Anspruch 1, **dadurch gekennzeichnet, daß** die metallische Markierung jeweils zwischen die Stirnseite des eigentlichen Dübels und die zugeordnete Stirnseite der Hülse eingelegt ist.

3. Fugendübel nach einem der vorstehenden Ansprüche, **dadurch gekennzeichnet, daß** die Markierung aus Stahl oder Aluminium besteht.

4. Fugendübel nach einem der vorstehenden Ansprüche, **dadurch gekennzeichnet, daß** die Markierung aus einer handelsüblichen Beilagscheibe besteht.

## Claims

1. Joint dowel, consisting of the actual dowel, made of plastics material, and a single-part or multi-part sleeve, made of plastic or plastics material, **characterised in that** a metallic marking is located in the region of each of its ends.

2. Joint dowel according to Claim 1, **characterised in that** the metallic marking is in each case inserted between the face side of the actual dowel and the face side of the sleeve allocated to it.

3. Joint dowel according to either of the preceding claims, **characterised in that** the marking consists of steel or aluminium.

4. Joint dowel according to any one of the preceding claims, **characterised in that** the marking consists of a conventional commercial washer.

## Revendications

1. Goujon d'assemblage, formé par le goujon proprement dit, réalisé en matière plastique, et par une gaine en une ou plusieurs parties, réalisée dans une matière plastique ou des matières plastiques, **caractérisé en ce qu'**un marquage métallique est réalisé dans la zone de chacune des ses deux extrémités.

2. Goujon d'assemblage selon la revendication 1, **caractérisé en ce que** le marquage métallique est inséré respectivement entre la face frontale du goujon proprement dit et la face frontale associée de la gaine.

3. Goujon d'assemblage selon l'une quelconque des revendications précédentes, **caractérisé en ce que** le marquage est réalisé en acier ou aluminium.

4. Goujon d'assemblage selon l'une quelconque des revendications précédentes, **caractérisé en ce que** le marquage est formé par une rondelle de calage, d'usage courant dans le commerce.
